# EUROPEAN PATENT APPLICATION

(11) **EP 2 390 844 A1**
(43) Date of publication of application: **30.11.2011**
(21) Application number: 10005394.1
(22) Date of filing: 25.05.2010
(51) Int. Cl.: G07B 15/00, G07C 9/02, G07C 9/00

(54) **Method and system to manage the access to restricted-acces areas**

(71) Applicant: AEROPORTO VALERIO CATULLO DI VERONA VILLAFRANCA S.p.A., 37060 CASELLI DI SOMMACAPAGNA (VR) (IT)
(72) Inventor: Soppani, Massimo, 31050 Povegliano TV (IT)
(74) Representative: D'Agostini, Giovanni

(57) **Abstract**

Airport security check method to provide heightened security in the security check-points and in the other restricted access areas of the type including a check of the passenger by means of a screening of the passenger himself/herself and a scanning of baggage and/or personal belongings of the passenger characterized in that said method provides that the security check point be divided into at least three areas, a first area which is located before the security check point, a second area which is located between a passenger entry apparatus and a security portal, a third area which is located after the portal, the access from the second area to the third area only occurring through the portal, the access from the first area to the second area only occurring through the passenger entry apparatus, said method comprising at least the phases relative to acquiring at least the data which are present on a boarding pass and/or ticket by means of a reading/scanning occurring by means of a check station provided with reading/scanning means, first check consisting in the comparison between the acquired data by means of the reading/scanning means with the respective data of the flight on which the passenger must board and/or with other data made available to the system, second check of the passenger by means of a screening of the passenger by means of the portal, scanning of baggage and/or personal belongings of the passenger by means of the inspection apparatus, possible insertion of data and/or notes relative to the result of the performed controls, the phase relative to the second check of the passenger occurring only following a positive result of the phase relative to the first check of the data of the passenger's documents, the comparison having a positive result only in the case in which the data are coincident with the respective data of the flight on which the passenger must board and/or with other data made available to the system.

## Description

### TECHNICAL FIELD

The present invention is directed to a method and a system to provide heightened security in the security check-points and in the other restricted access areas of the airport respectively according to the characteristics of the pre-characterizing part of claim 1 and of claim 14.

More in detail the present invention is directed to a method and a system to provide heightened security in the security check-points relative to the access to airports restricted-access areas for passengers, as, for example, shopping areas and/or boarding areas, and to monitor the movements of travelers in the same areas until they board on the airplane.

### DEFINITIONS

In the course of the present description the expression "positive result of the comparison" indicates that a comparison is carried out between different acquired data and/or data supplied to the system and/or manually introduced data. If this comparison provides as a result the coincidence or correspondence between the different data or anyway it provides the expected result in relation to the compared data then one will say that this comparison had a positive result. On the contrary if only one or only a part of the compared data does not correspond, then the comparison can have a partially positive result or a negative result according to the importance of the data that do not correspond.

In the course of the present description the expression "security portal" generically indicates a scanning portal of the body of a passenger that goes through it. This security portal can comprise for example a magnetometer and/or a scanning device of the so-called type body scanner or scanner full body scanner, that is those devices able to carry out a scanning of the body of the passenger highlighting possible objects, also not-metallic objects, hidden under the dresses of the passenger. It will be apparent that the expression "security portal" can indicate:
- a magnetometer;
- a single device integrating the functions of a magnetometer and of a body scanner or full body scanner;
- the sequence of two different devices, one of which is a magnetometer and the other one of which is a body scanner or full body scanner.

### PRIOR ART

In the field of the production of security check-points and more in detail security check-points relative to the access to airport restricted-access areas for passengers, several physical security systems are provided by means of airport security patrols and by means of hand baggage verification.

Typically, these security check-points are arranged at those areas leading from the public areas of the terminal (where ticket sale desks, registration or check-in desks, public access restaurants and shops are located) into the restricted areas where the airplane gates are located. A security check-point must allow the screening of the people entering the restricted areas and prevent people from circumventing the security check-point by trying to enter the restricted areas through the exit.

Usually the passenger control first provides a visual check of the boarding pass by a first security agent to check if the passenger is allowed to access the airport restricted-access areas. Possibly the passenger is also identified by visual verification of the corresponding ID card or passport.

Subsequently the passenger accesses a specific security check-point area.

The passenger is required to deposit the hand baggage onto a conveyor belt and all of the personal belongings not admitted on his/her person, such as, for example, clothes, money purse, mobile phone, keys, possibly the shoes, etc. into a specific container, generally made of a plastic material; the container is therefore placed by the passenger itself onto the same conveyor belt where the passenger deposits the hand baggage too. Usually, before said conveyor belt, a first idle roller line is arranged where the passenger can deposit the hand baggage and/or the container and pull by hand the same beside himself/herself before getting to the conveyor belt. Then the hand baggage and/or the container are drag by the conveyor belt into a scanning tunnel for separate checking, equipped with very sophisticated checking means and with a specific monitoring by specialized operators, that is by a second security agent. Usually the scanning occurs by means of X-ray machines and/or other scanning devices. If a suspicious baggage or item is found, the baggage or item is removed from the conveyor and the person carrying it is required to opened it so that a visual inspection can occur, usually performed by a third security agent. On the other side of the control area a second idle roller line is arranged, at the exit of the tunnel, namely at the end of said conveyor belt, where said hand baggage and/or containers are accumulated. The person concerned who has passed the other checking can therefore take his/her hand baggage and personal belongings from said container and access the airport restricted-access areas.

At the same time at which the checking of the hand baggage and personal belongings occurs, the passenger is subject to further checking.

The passenger must pass through an arch or portal which includes, for example, a magnetometer that provides a first level of screening of the person. If the magnetometer detects an object which is suspect, an alarm sounds and the passenger is stopped by a forth security agent who asks the passenger to empty the pockets, step back through the arch or portal and pass through it again. If the second passage does not cause any alarm, the passenger can take back the items he/she had in the pockets and proceed to the following checks. If an alarm again sounds, the passenger may be requested to pass through the arch or portal again a third time, or the passenger will be subject to a second level of screening of the person in which a security agent will use a magnetometer wand, to go over the passenger's body and locate whatever is causing the alarm. Having passengers cycling more than one time through the first level of screening of the person clogs the queue leading to the security check-point, and creates a bottleneck for other passengers who are waiting to get to their boarding gates.

Patent WO 02/29744 discloses an ingress/egress control system for airport areas and other controlled-access areas wherein two distinct security portals are arranged to provide the screening of the passenger, the second one of which provides an additional screening for persons suspected of carrying prohibited items in order to prevent the formation of queues.

US patent 6,158,658 discloses a system and method for matching passengers and their baggage. One embodiment of the invention includes a reader for scanning the passenger's boarding pass before the passenger is permitted to board the commercial carrier. The system then compares the boarded passengers identifiers to the passenger identifiers generated at the registration or check-in phase to identify passengers who checked-in baggage but failed to board the commercial carrier. Having these passenger identifiers enables the baggage handler to find the baggage corresponding to the non boarded passengers so that he/she can recover the image of the non boarded passenger's baggage, thereby identifying them in order to remove them from the commercial carrier. The identification of the passenger occurs by means of a passenger unique identifier which is automatically generated by a computer for identifying the particular passenger.

US patent 4,993,068 discloses an unforgeable personal identification system. One embodiment of the identification system includes an apparatus for generating encrypted physically immutable identification credentials of a user that are stored on a portable memory device. A remote access control site first reads the encrypted identification credentials from the portable memory device. Next, the user has his/her actual physical characteristics input to the access control site via a physical trait input device. Lastly, the identification credentials input directly from the user and those input via the portable memory device are compared. If the comparison is successful, the requested access is granted to the user. Otherwise, the requested access is denied by the remote access control site.

WO 03053783 discloses a method for providing passenger identity accountability, comprising the following steps: receiving information identifying a passenger seeking to board a commercial carrier; designating the passenger as checked-in; and using a frequent flyer card or a smart card type boarding pass to monitor the location of the checked-in passenger prior to boarding the commercial carrier.

### PROBLEMS OF THE PRIOR ART

In general prior art systems fail in providing fast, reliable and cheap checking systems of the boarding data. This causes long checking procedures at the security check-points further involving room for errors and therefore a reduction of the security level and economical aspects connected with the short stay of the passenger in the duty free area.

The system disclosed in WO 02/29744 partially solves the problem relative to the formation of queues providing a second security portal to provide an additional screening for persons suspected of carrying prohibited items following the activation of the alarm generated at the first security portal. However, if a first passenger causes the activation of the alarm of the first security portal and is stopped to go through the second security portal and the following passenger also causes the activation of the alarm of the first portal, the advantages due to this configuration are nullified. The system also has the disadvantage relative to a higher cost due to the installation of two security portals for each security check-point. Furthermore the disclosed system fails in providing and/or recording additional information on the passengers as, by way of example only, identification of the passenger, destination, existence of the flight, real consent to access the flight, whether or not the passenger boarded a baggage, etc. The system also fails to disclose the capability to monitor the movements of passengers while in the airport terminal.

The system disclosed in U. S. Patent 6,158, 658 provides that the information relative to the passenger are not stored on the boarding pass but that they are stored on a database which is accessible from the security check-points by the security agents to recover such information by means of the unique passenger identifier automatically generated by the computer. In the case in which the related database is temporary inaccessible, the security agents would have no way to recover such information and check the validity of the boarding pass. The system also fails to disclose the capability to monitor the movements of passengers while in the airport terminal.

The system disclosed in US Patent 4,993, 068, providing for each passenger to have a portable memory device containing the encrypted physically immutable identification credentials of the user, is a system which will be hardly applicable for those passengers who are not frequent flyers but who are occasional flyers. Two different verification procedures should therefore be provided for frequent flyers and for occasional flyers. The system also fails to disclose the capability to monitor the movements of passengers while in the airport terminal.

The system disclosed in WO 03053783 provides two different identification procedures depending on the fact that the concerned passenger has a frequent flyer card or on the fact that the concerned passenger is not a frequent flyer, resulting in a complication of the procedure to be followed for its identification. Furthermore, in the case in which the passenger does not have a frequent flyer card, the system provides the issuing of a specific smart card who is used as boarding pass and containing all the data needed for the access to the restricted access areas and for the boarding operations, with resulting costs relative to the supply of a large number of smart cards to be written with the data of the passenger from time to time. This system causes, for example in the case of a temporary fault of the reading system of the smart cards, the complete stop of the security checks and boarding operations, because the needed information is stored in the smart card.

### AIMS OF THE INVENTION

The aim of the present invention is to provide a method and a system to provide heightened security in the airport security check-points which in the meantime also provides a speed up in the checking procedures and which is reliable and cheap too.

### CONCEPT OF THE INVENTION

The aim is reached with the characteristics of the main claim. The dependent claims represent advantageous solutions.

### ADVANTAGEOUS EFFECTS OF THE INVENTION

The solution according to the present invention, by the considerable creative contribution the effect of which constitutes an immediate and not negligible technical progress, presents many advantages.

The method allows a reliable verification of the data of the passenger and of the boarding pass providing a fast checking that the passenger is accessing to the scheduled restricted-access area and not to another restricted-access area to which he/she is not allowed to access.
Furthermore the method also allows the verification of the effective existence of the flight on which the passenger must board, preventing the access to restricted-access areas to the passengers whose flight has been cancelled or the boarding procedures of which have been closed or whose flight has already left the airport.

The method and the system according to the present invention allow to have a security check-point which is closed by openable/closable barriers to allow the access to restricted-access areas only to authorized passengers, preventing wrongdoers to force the check-point requiring the security agents to run after him/her inside the restricted-access areas.

The method and the system according to the present invention allow to follow the movements of the passengers by means of the verification of the passage of the corresponding boarding-pass at the different check-points/stations of the boarding-pass, as for example the check-in area, the area corresponding to the security check-point, the area corresponding to the boarding gate. In a more extended solution of the present invention, the passage of the boarding pass can be also followed inside the restricted-access areas, for example at further check-points, in the shops or at the boarding areas. The verification of the passage of the boarding-pass at the different check-points/stations allows to obtain statistics relative to the staying of the passengers in the various areas, relative to the access and transit times, waiting times, etc. This is very useful to identify possible bottle-necks causing delays and thus allowing to improve the access system as a whole.

The method and the system according to the present invention allow to use fewer security agents at the security check-points with relevant economical advantages.

The method and the system according to the present invention also allow to improve security of the security check-points.

### DESCRIPTION OF THE DRAWINGS

A practical embodiment is described hereafter with reference to the included drawings to be considered as a non-limitative example of the present invention in which:
Fig. 1 is a schematic plan view showing an airport and the different areas which can be found into an airport.
Fig. 2 is a schematic tridimensional drawing showing a turnstile intended for the installation in a security check-point operating according to the method according to the present invention.
Fig. 3 is a schematic tridimensional drawing showing a gate intended for the installation in a security check-point operating according to the method according to the present invention.
Fig. 4 is a schematic tridimensional drawing showing a handicap access door intended for the installation in a security check-point operating according to the method according to the present invention.
Fig. 5 is a schematic tridimensional drawing showing a column check station intended for the installation in a security check-point operating according to the method according to the present invention and/or in other areas of the airport.
Fig. 6 is a schematic tridimensional drawing only showing the upper part of the column check station of Fig. 5.
Fig. 7 is a schematic tridimensional drawing showing a security check-point operating according to the method according to the present invention.
Fig. 8 is a schematic tridimensional drawing showing a different embodiment of the security check-point operating according to the method according to the present invention.
Fig. 9 is a schematic drawing showing a first embodiment of the screen containing some of the data which are displayed to the security agent in a check station of a security check-point operating according to the method according to the present invention.
Fig. 10 is a schematic drawing showing a second embodiment of the screen containing some of the data which are displayed to the security agent in a check station of a security check-point operating according to the method according to the present invention.
Fig. 11 is a schematic drawing showing a third embodiment of the screen containing some of the data which are displayed to the security agent in a check station of a security check-point operating according to the method according to the present invention.
Fig. 12 is a schematic drawing showing a first embodiment of a boarding pass intended to be used to access to a security check-point operating according to the method according to the present invention.
Fig. 13 is a schematic drawing showing a second embodiment of a boarding pass intended to be used to access to a security check-point operating according to the method according to the present invention.
Fig. 14 is a schematic drawing showing an electronic ticket intended to be used to access to a security check-point operating according to the method according to the present invention.
Fig. 15 is a schematic tridimensional drawing showing a different embodiment of the security check-point operating according to the method according to the present invention.
Figs. 16-19 represent a block diagram explaining the method to manage the access to restricted-access areas according to the present invention.

### DESCRIPTION OF THE INVENTION

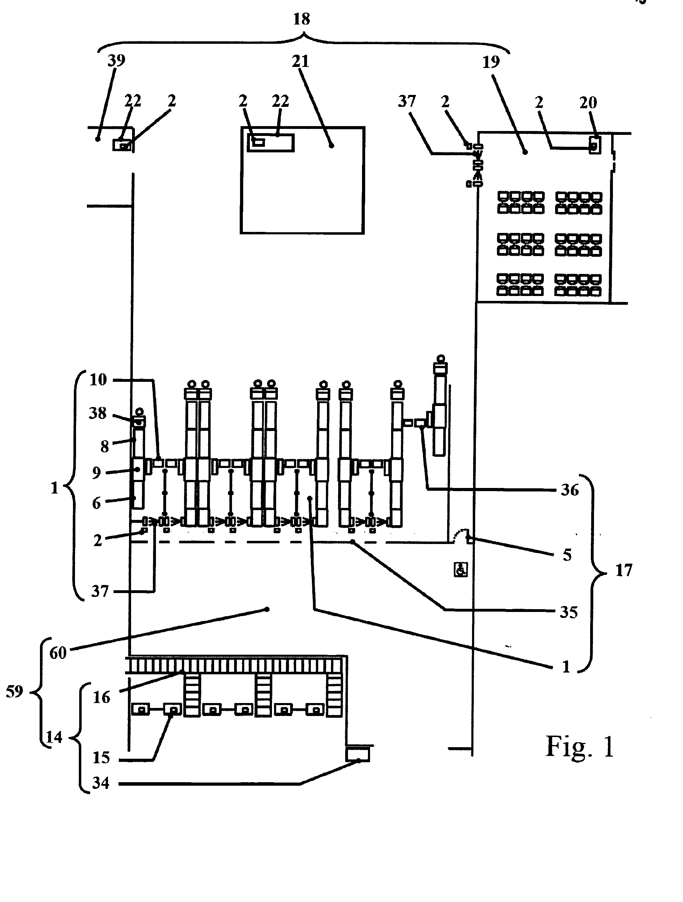

[0029] In general an airport (Fig. 1) is composed of different areas among which it is possible to identify at least one area for the registration (14) or check-in area, a queuing up area for passengers (60) possibly with a courtesy lane (35), which form the free access areas (59), a security check area (17), a restricted access area (18) comprising at least one boarding area (19) and possible trade companies as shops (21) and restaurants (39).

The check-in area (14) includes the check-in desks (15) at which the boarding pass is issued and at which the baggage to be embarked on the plane is left, the baggage being sent to the baggage embarkment areas by means of baggage conveyors (16).

The method to manage the access to restricted-access areas according to the present invention includes at least the following steps:
- acquiring at least the data which are present on a boarding pass (46) and/or ticket (53) and or identity document by means of a reading/scanning occurring by means of a check station (2) provided with reading/scanning means (50);
- first check consisting in the comparison between said data acquired by means of said reading/scanning means (50) with the respective data of the flight on which the passenger must board and/or with other data made available to the system and/or with possible data relative to a passenger identity document, said comparison having a positive result only in the case in which said data are coincident and/or if the flight exists and is confirmed and/or the boarding procedures of the flight have not being closed;
- second check of the passenger by means of a screening of the passenger by means of said portal (10);
- scanning of baggage and/or personal belongings of the passenger by means of said inspection apparatus (9);
the phase relative to said second check of the passenger occurring only following a positive result of the phase relative to said first check of the data of the passenger's documents.
The security check method can in particular comprise the check of one or more of the following data:
- Identity of the passenger
- Boarding-pass code
- Flight code
- Date of the flight
- Scheduled departure time of the flight
- Acceptance sequence
- Departure airport
- Transit airport or airports
- Destination airport
- Scheduled boarding gate
- Travel class
- Reserved seat
- Flight reservation number
The acceptance sequence is an univocal number that is assigned to each of the passengers and that is automatically released by the system and it indicates the passenger acceptance order (first, second, third, etc). If, for any reason, a passenger is cancelled from the flight, then the system cancels the sequence corresponding to such passenger and it does not release it for any additional passenger.

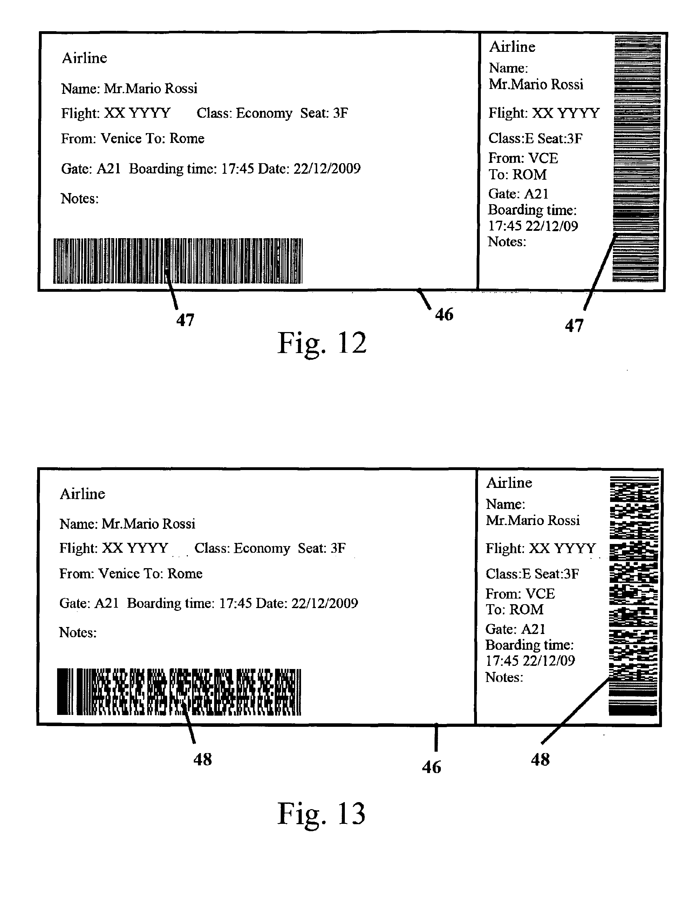

Preferably (Fig. 12) the acquisition of said data from said passenger boarding pass (46) and/or ticket (53) by means of said reading/scanning means (50) occurs by means of a bar code/encrypted bar code (47, 48) printed on said boarding pass (46) and/or ticket (53), said bar code (47, 48) comprising one or more of the previously explained data.
In the preferred embodiment of the present invention (Fig. 13) said bar code is an encrypted bar code (48).

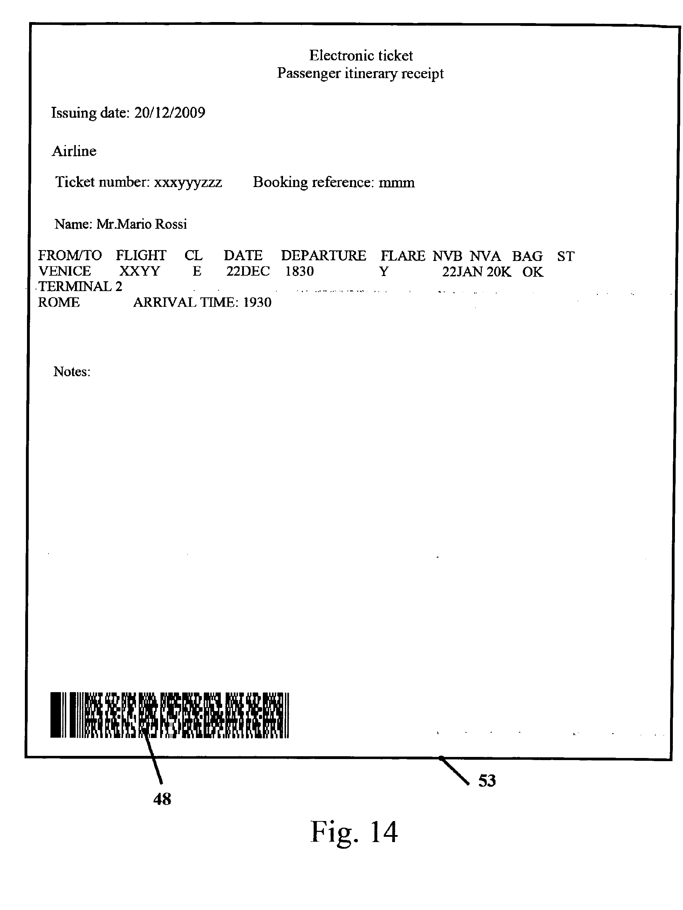

This solution allows an increased security because counterfeiting the boarding pass or the ticket is more difficult and the verification of the same does not occur visually but by an effective check of the data as previously explained. Moreover the present invention allows the passengers who do not have baggage to board to go directly to the security check-points (1) for example with (Fig. 14) an electronic ticket (53) on which the bar code will be present, preferably the encrypted bar code (48). In the case in which the passenger has baggage to board he/she will be required to go anyway to the check-in desks (15) where a boarding pass (46) will be issued having the same bar code, favoring the reconstruction of the movements of the passenger in the airport.

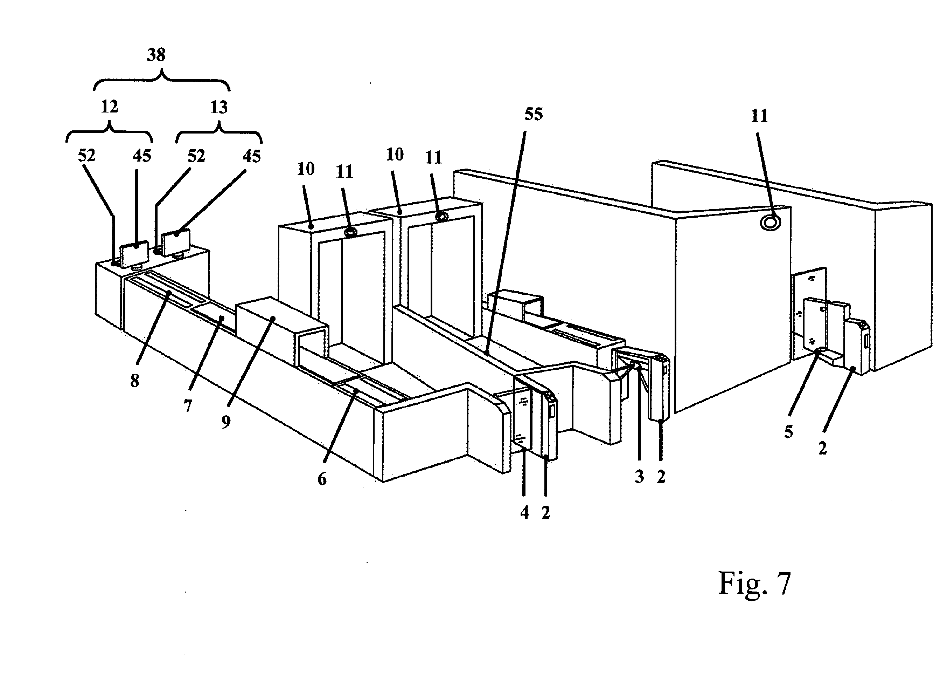

With reference to the security check-point operating according to the method according to the present invention (Figs. 7, 8, 15), it is of type including:
- at least one security check-point (1) comprising at least one security portal (10) through which the passengers entering in the restricted access area (18) must pass undergoing a screening relative to the presence of forbidden objects, an inspection apparatus (9) which is usually an X-rays apparatus provided with at least one first hand-baggage track (6) and at least one second hand-baggage track (8) and a conveyor belt (7) to convey the baggage and/or the personal belongings through said inspection apparatus (9), an inspection station (12) being associated to said inspection apparatus (9) allowing a security agent to control the result of the scanning carried out by means of said inspection apparatus (9) on said baggage and/or personal belongings identifying the forbidden articles;
- separators (55) provided between adjacent security check-points (1) preventing the passengers to move from a security check-point (1) to another one after they entered in one of the security check-points (1).
The method to manage the access to restricted-access areas according to the present invention provides that the security check point (1) further include an entry apparatus (37) and at least one check station (2), said check station (2) being equipped with reading/scanning means (50) intended to read/scan at least one boarding pass (46) and/or ticket (53) of the passenger to acquire data on the passenger and/or on the flight, said passenger entry apparatus (37) and said portal (10) defining:
- a first area (56) of the security check-point (1), said first area being located, with respect to the position of said passenger entry apparatus (37), before said entry apparatus (37) in the direction of a free access area (59) of the airport, at least one of said check stations (2) being located in correspondence with said first area (56) of the security check-point (1);
- a second area (57) of the security check-point (1), said second area being located between said passenger entry apparatus (37) and said portal (10), said conveyor belt (7) conveying baggage and/or personal belongings through said inspection apparatus (9) being located in said second area (57);
- a third area (58) of the security check-point (1), said third area being located, with respect to the position of said portal (10), after said portal (10) in the direction of the restricted access area (18) of the airport, said inspection station (12) being located in said third area (58).
The access from said second area (57) to said third area (58) only occurs through the portal (10). The access from said first area (56) to said second area (57) only occurs through said passenger entry apparatus (37).

The method according to the present invention provides at least two checks of the passenger to occur, a first check of which occurring by means of said data acquired by means of said reading/scanning means (50) by means of a comparison between said data with the respective data of the flight on which the passenger must board and/or with other data made available to the system, said comparison having a positive result only in the case in which said data are coincident and/or if the flight exists and is confirmed and/or the boarding procedures of the flight have not being closed, and a second check of the passenger occurring by means of said portal (10).

In addition to the previously explained data, by means of said reading/scanning means (50) of the check station (2), the method can also provide the acquisition of the data of an identity card or passport of the passenger and the comparison between the data relative to the method according to the present invention can therefore also comprise the comparison between the identity of the passenger acquired from said identity card or passport and the identity of the passenger acquired from said boarding pass (46) and/or ticket (53) of the passenger said comparison having a positive result only in the case in which said data are coincident.

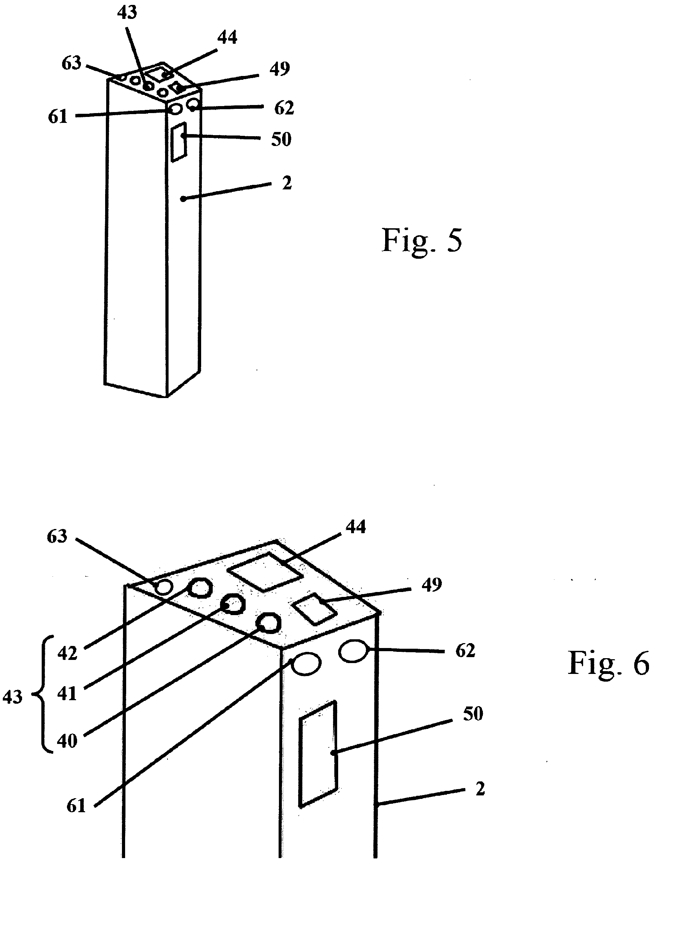

In the preferred embodiment of the security system operating according to the method according to the present invention (Fig. 5, 6), the check station (2) provided with reading/scanning means (50) intended to read/scan at least one passenger boarding pass (46) and/or ticket (53) is a column shaped check station, favoring its integration in the existing airport structures but it will be apparent that the check station (2) and the respective reading/scanning means (50) can be directly integrated also in the devices which will be described in the following of the present description or in other existing structures.

Particularly the security check method can provide that the passenger be prevented from accessing the security check area (17), in the case in which he/she does not pass with a positive result the phase relative to said first check of the data of the passenger's documents. For this purpose, the passenger entry apparatus (37) can be provided with openable/closable means blocking the access from said first area (56) to said second area (57), the opening of said openable/closable access blocking means occurring at least on the basis of a positive result of said first check by means of a comparison between said data, said passenger entry apparatus (37) being connected to said separators (55) forming a barrier together with them when said passenger entry apparatus (37) is in a closed condition, said barrier formed by said passenger entry apparatus (37) connected to said separators (55) preventing the passenger from entering into said first area (56) if the passenger is in said free access area (59) and he/she does not pass with a positive result said first check, said barrier preventing the passenger from escaping from said first area (56) back to said free access area (59) if the passenger is inside said first area (56).

Even more preferably the security check method according to the present invention can provide that the opening of said openable/closable access blocking means occur if at least the following conditions occur:
- the result of said first check by means of a comparison between said data is a positive result
- the passenger who previously passed through said entry apparatus (37) has gone past said portal (10), freeing said second area (57) and accessing to said third area (58), said portal (10) being provided with means intended to detect the passage of the passenger through said portal with a positive result of the check made by said portal (10).
Moreover the opening of said openable/closable access blocking means can be prevented also if the condition relative to the actual existence of the flight does not occur with a positive result and/or if the boarding procedures of the flight have being closed, ensuring an increased security of the airport itself.

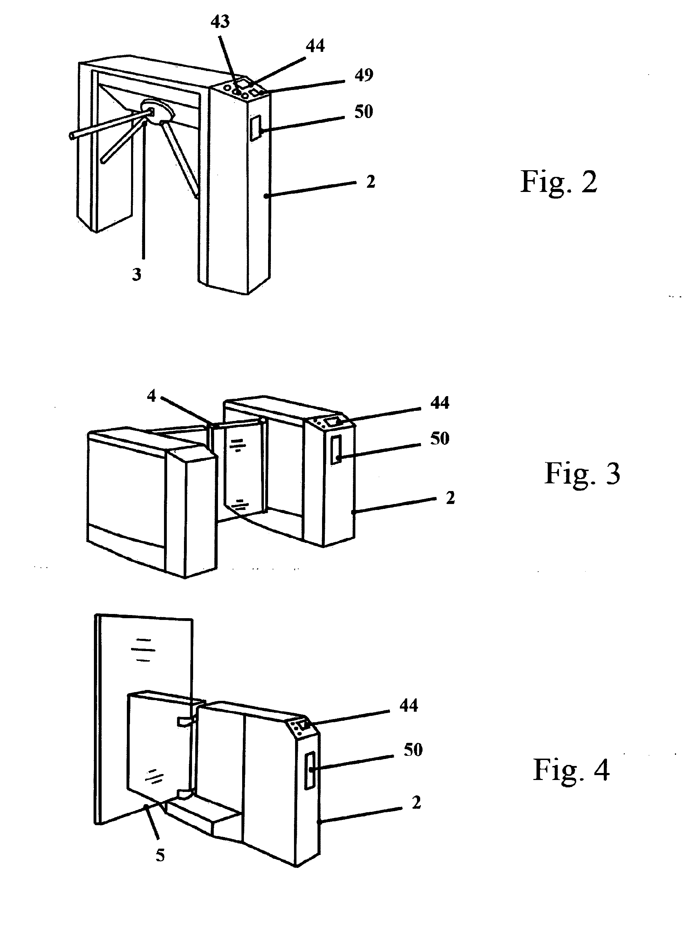

For example said passenger entry apparatus (37) provided with openable/closable means can be (Fig. 2) a turnstile (3), said turnstile (3) comprising said check station (2) provided with reading/scanning means (50).
Or said passenger entry apparatus (37) provided with openable/closable means can be (Fig. 3) a gate (4), said gate (4) comprising said check station (2) provided with reading/scanning means (50).
Or said passenger entry apparatus (37) provided with openable/closable means can be (Fig. 4) a handicap access door (5), said handicap access door (5) comprising said check station (2) provided with reading/scanning means (50).

The system according to the present invention can comprise a staff entry (36) provided with the same check devices or provided with control systems by means of staff identifying cards.

The security check method can furthermore provide a phase relative to the saving of all or part of the acquired data and/or of the result of the performed checks and/or of the result of the performed controls and/or a phase relative to the sending of the data to a data archive intended to perform further checks on the passenger and/or on his/her identity or authorization to board. The data can be sent to criminal investigation data archive or to a police agency. The police agency may determine whether the passenger is a wanted person or other person of interest. Once identified the passenger as a wanted person or other person of interest, the passenger can be blocked and/or a more accurate analysis of his/her baggage and/or of his/her dresses and/or of his/her personal belongings can occur.

Moreover, based on the collected information, the system according to the present invention is able to determine if the passenger does not have a confirmed reservation on the flight and thus the passenger is not allowed to access the restricted access areas. This may occur by means of a comparison of the acquired data with the data archive of the airlines, thus allowing the access to the boarding areas only to those passengers who have a boarding-pass with a confirmed reservation and/or whose flight has been confirmed. Such verification can be implemented in different ways:
- the air-line company makes the data available relative to the passengers to allow the comparison between the acquired data at the security check-point;
- at the security check-point such data can be acquired, for example by means of the bar code, and they can be sent, possibly in an encrypted way and without any visualization of the private data, to the air-line company which will release a confirmation relative to the fact that the corresponding passenger or the corresponding boarding pass are authorized for the access for that particular flight;
- by means of the boarding pass code, which will be the confirmation element from the air-line company that the corresponding boarding pass is authorized for the access for that particular flight in combination with the passenger data or the verifications performed at the check-in and at the corresponding check-in confirmation.
This verification allows to obtain a high security degree preventing non-authorized persons from accessing the restricted access areas.

Moreover the security check method according to the present invention can also provide a control phase of the acquired data check result by a security agent, said control occurring by means of a check station (13) at least including a monitor (45) displaying said data acquired by means of said reading/scanning means (50) and the result of the check.

The security check method according to the present invention can further provide an acquisition phase relative to the acquisition of an image (30) of the face of the passenger by means of at least one camera (11), said image of the face of the passenger being displayed on said monitor (45) together with said acquired data and together with the result of the data check. The check station (13) will be preferably positioned in correspondence of the inspection station (12), forming a control desk (38) that is able to control all the check made on the passenger.

Advantageously the security check method according to the present invention can also provide further checking phases in correspondence of further check stations (2) provided with reading/scanning means (50), said further check stations (2) being located at the accesses to the boarding areas (19) and or at boarding desks (20) and/or at the trade companies (21, 39) of the airport, for example at the cash desk (22). It will be apparent that in a different embodiment of the present invention, also at the entry and at the exit of the trade companies (21, 39) of the airport, said entry apparatuses (37) provided with openable/closable means and corresponding exit apparatuses can be present of the previously described type as turnstiles (3) or gates (4) or handicap access doors (5).

The system according to the present invention can therefore assign at least three states to each passenger or to the corresponding boarding pass:
- the passenger has performed the check-in but he has not gone to the security check area (17) yet and, thus, he is in the free-access area (59);
- the passenger is in the security check area (17);
- the passenger has passed the security check area (17) but he has not boarded yet and, thus, he is in the restricted-access area (18).
This allows to follow the movements of the passenger inside the airport area, or, better, this allows to follow the movements of the passenger by means of the verification of the passage of the corresponding boarding pass at the different check-points/stations of the boarding-pass itself, generating appropriate statistics relative to the staying times in the various areas and to the access to the trade companies, to the waiting times and path covering times, allowing an improvement of the procedures and/or of the visibility of the trade companies and/or allowing to speed up the procedures depending on the generated statistics. In a more extended solution of the present invention, the passage of the boarding pass can be also followed inside the restricted-access areas, for example at further check-points/stations, in the shops or at the boarding areas.

Therefore, in general, the system according to the present invention allows to identify the status of the passenger by means of the verification of the passage of the corresponding boarding pass (46) at the different check-points/stations (15, 1, 21, 39, 19, 20) of the same boarding pass, the status of the passenger being able to assume at least the statuses selected from the group consisting of:
- Check-in performed: the passenger has performed the check-in but he has not gone to the security check area (17) yet, the passenger being in the free-access area (59);
- Security check taking place: the passenger is in the security check area (17);
- Boarding waiting: the passenger has passed the security check area (17) but he has not boarded yet, the passenger being in the restricted-access area (18);
- Trade area access: the passenger is in the trade areas (21, 39) of the restricted-access area (18);
- Boarding performed: the passenger has gone out from the restricted-access area (18) and he has boarded.
It will be obvious that in the case in which the flight is cancelled or delayed after the boarding procedure of the passengers and the passengers enter the restricted-access area (18) again, the status of all of the boarded passengers will again be set to the boarding waiting condition.

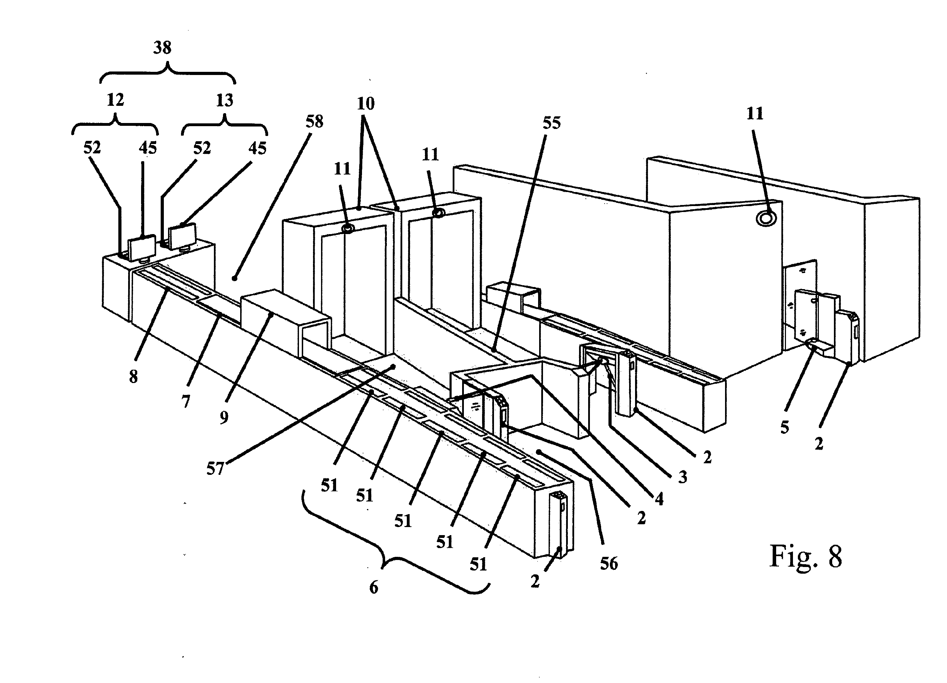

In the preferred embodiment of the security system operating according to the method according to the present invention, preferably (Fig. 8) before said first hand-baggage track (6) a plurality of consecutive baggage tracks (51) is provided, at least one of said ways for consecutive luggage (51) being placed in said first area (56), at least one of said consecutive baggage tracks (51) being located in said first area (56), the method according to the present invention providing that at least one of said consecutive baggage tracks (51) be provided with motor movement means, the activation of said motor movement means occurring following a positive result of said comparison between said data.

In this way a passenger who is in the first area (56) can get ready in advance for the checking procedures while other passengers coming before him/her already got ready and other passengers are already inside the second area (57) or inside the third area (58), making the check procedures faster.

Even more preferably the method according to the present invention provides a preliminary checking phase by means of which the passenger can previously check the correctness of his/her boarding pass and/or ticket and/or flight data even before getting ready, further making the check procedures faster. For this purpose (Fig. 8) before said consecutive baggage tracks (51) an additional check station (2) is provided by means of which the passenger can perform such preliminary check before getting ready for the checks in the security check point.

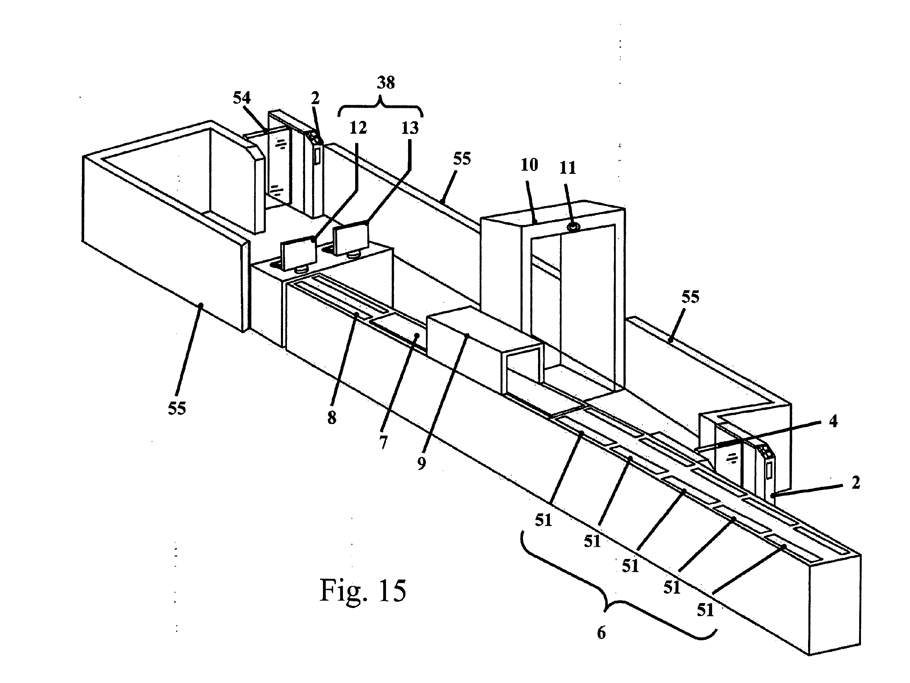

In a different embodiment (Fig. 15) the method according to the present invention provides that the passenger be physically prevented from exiting from the security check area (17), until they have passed with a positive result all the previous checking phases. For this purpose, the security system operating according to the method according to the present invention can include a passenger exit apparatus (54) provided with openable/closable means blocking the access from said third area (58) to said restricted access area (18), said passenger exit apparatus (54) being connected to said separators (55) forming a barrier together with them when said passenger exit apparatus (54) is in the closed condition, said barrier consisting of said passenger exit apparatus (54) connected to said separators (55) preventing the passenger from exiting from said third area (58), said exit apparatus (54) being provided with a check station (2) provided with a reading/scanning means (50), the opening of said openable/closable means blocking the access occurring if said passenger has passed with a positive result all the provided checks.

In particularly advantageous embodiments of the present invention (Fig. 5, 6), the check station (2) provided with reading/scanning means (50) also includes a traffic light (43) and/or a display (44) and/or a loudspeaker (61) and/or a microphone (62) controlled depending on the result of the checks performed on the passenger and on his/her documents and intended to communicate to the passenger the results of such checks and/or to communicate to the passenger the following actions the passenger must do. For example the traffic lights can include a green light (40) to inform the passenger he/she has to proceed from the first area (56) to the second area (57), a yellow light to inform the passenger he/she has to wait and a red light (42) to inform the passenger that the check had a negative result, possibly with a message on the display (44) telling him/her what to do. Said check station (2) can also be provided with at least one push-button (63) intended to ask for the help of the service staff. Moreover, said check station (2) can also be provided with a biometric reader (49) intended to read biometric data of the passenger, as for example fingerprints, and to compare them with biometric data which can for example be present on the passenger's identity card or passport or with biometric data which can be present on a proper certified card or with biometric data which could have previously been acquired, saved and made available to the system. Said biometric data may be sent to a criminal investigation data archive or to a police agency. The police agency may determine whether the passenger is a wanted person or other person of interest. Once identified the passenger as a wanted person or other person of interest, the passenger can be blocked and/or a more accurate analysis of his/her baggage and/or of his/her dresses and/or of his/her personal belongings can occur. The management of the biometric data can be implemented taking into consideration the privacy of the acquired data: for example such data could be only compared with the data which are present on an identity card which makes such data available, without such data being recorded by the system.

Moreover the system can also comprise means to save all or part of the acquired data and/or of the checks results and/or the results of the performed controls. For example the check station (13) and/or the inspection station (12) can be provided with a keyboard (52) to input notes relative to the performed controls or recommendations to be taken in account during possible future controls to be performed on the same passenger.

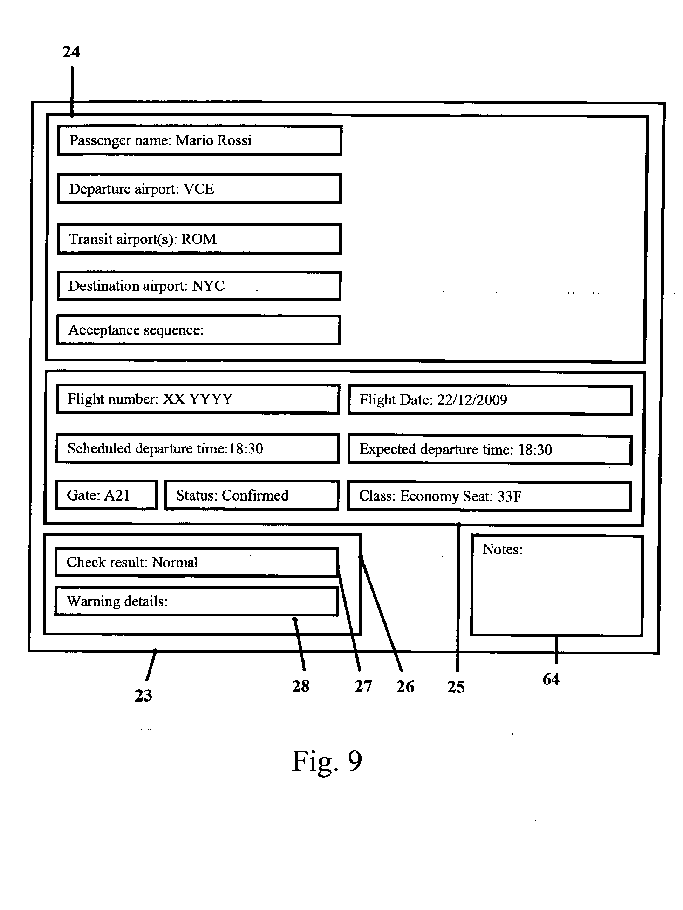

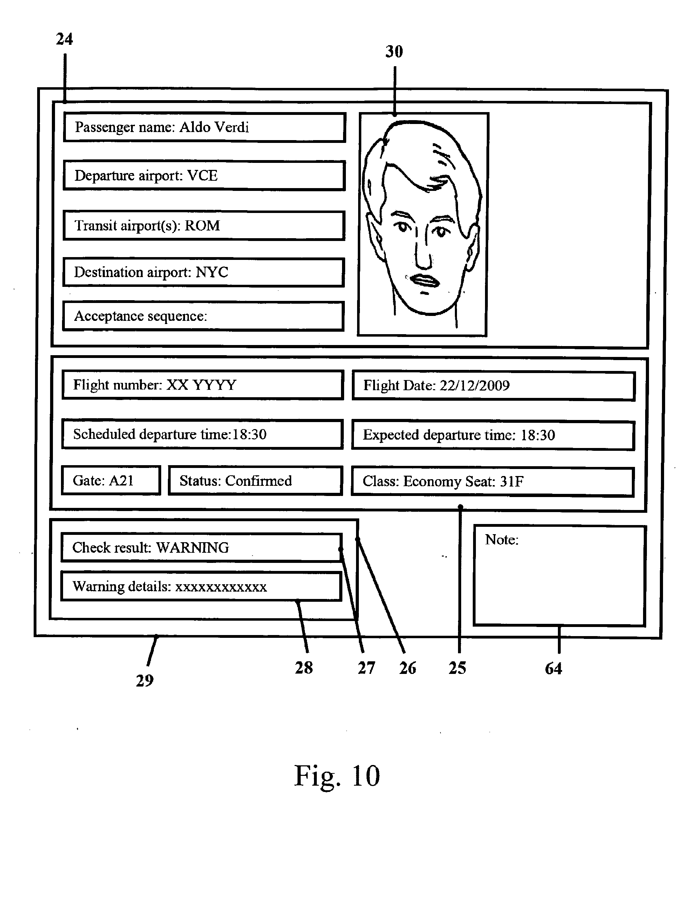

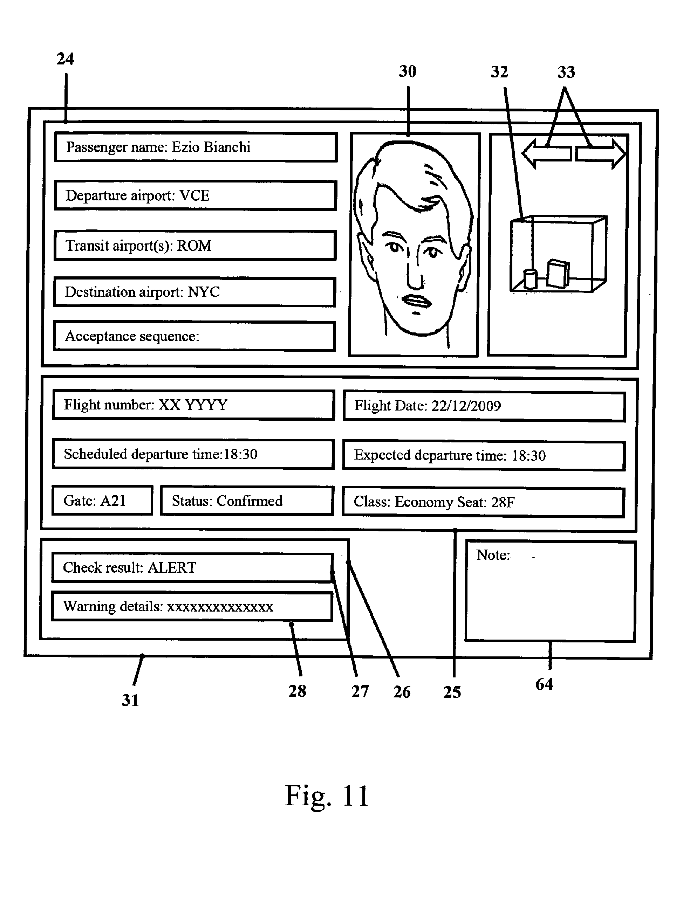

On the monitor of the check station (13) the following information can be made available (Fig. 9) to the security agent on a first screen (23):
- passenger data section (24) showing the data relative to passenger name, departure airport, transit airport or airports, destination airport, acceptance sequence;
- flight data section (25) showing the flight number, the flight date, the scheduled departure time, the expected departure time, the boarding gate, the status of the flight, the travelling class and the seat;
- check section (26) showing the check result (27) and the check result details (28), as for example the reason of an alarm or the request for more extensive checks to be performed on the passenger and/or on his/her baggage.
On the monitor of the check station (13), apart from the previously described information, the following information can be made available (Fig. 10) to the security agent on a second screen (29):
- passenger image (30) acquired by means of said camera (11).
On the monitor of the check station (13), apart from the previously described information, the following information can be made available (Fig. 11) to the security agent on a third screen (31):
- baggage image (30) acquired by means of said inspection apparatus (9), more than one image been able to be consecutively displayed by means of selection means (33) of the acquired images.
A notes section (64) allows to input notes relative to the performed checks, by means of said keyboard (52) of the check station (13): for example notes can be inserted relative to the performed controls or recommendations to be taken in account during possible future controls to be performed on the same passenger.

[0055] It is important to point out that the system according to the present invention allows to perform a crosscheck between the data which are present on the boarding pass, the data which are available to the airline company, and the data which are available to the airport administration. For example on the boarding pass the code is present of the flight on which the passenger is expected to board and comparing such data with the list of the passengers which is available by the airline company a verification can be made of the fact that such passenger is really present on the list of the scheduled passengers. This result can be achieved in different ways:
- the airline company makes the data available relative to the passengers to allow the comparison with the data which are acquired at the security check-point;
- at the security check-point such data can be acquired, for example by means of the bar code, and sent, possibly in an encrypted way and without any visualization of privacy protected data, to the airline company, which will release a confirmation relative to the fact that the passenger or the boarding pass are authorized for the access to the corresponding flight;
- by means of the boarding pass code which will constitute the conformation element from the airline company relative to the fact that the boarding pass is authorized for the access to the corresponding flight in combination with the data of the passenger or the checks which have been performed at the check-in and at the corresponding check-in procedure.
Such verification allows to obtain a high security degree preventing the access to the restricted access areas to persons which are not authorized to enter such areas.

[0001] As a matter of fact the boarding pass code can be a unique code associated to the boarding pass (46) and/or ticket (53) which is acquired by means of the reading/scanning means (50). The boarding pass code can then be used as a comparison means with the data of the flight on which the passenger must board, the comparison having a positive result only in the case in which said boarding pass code corresponds to one of the boarding pass codes which are authorized for the access to the corresponding flight.

The system can be also applied in the case of the so-called fast check-in procedures-for example at a fast check-in station (34).

Moreover the system also allows to completely avoid the check-in phase allowing the passenger to go directly to the security check point with a previously printed boarding pass or with an electronic ticket, also speeding up the check-in procedures and decreasing the queues at the check-in desks.

From the illustrated embodiments, it will be apparent that a reduction of the staff used for the security checks is possible without reducing the effectiveness of the security checks, rather achieving an increased security thanks to the previously described advantages. Indeed, in the security check points of the prior art there are at least the following security agents are provided:
- a first security agent who checks the boarding pass and/or the documents before the passenger enters in the security check point;
- a second security agent who controls the baggage at the inspection station (12) by means of the inspection apparatus (9);
- a third security agent to visually inspect the baggage content following the recommendation of the second security agent in the case in which suspicious objects have been detected by means of the inspection apparatus (9);
- a fourth security agent who controls the passage of the passenger across the arch or security portal (10) and who possibly, in case of an alarm, asks the passenger to empty the pockets, step back through the arch or portal and pass through it again;
- a fifth security agent who uses a magnetometer wand to examine the body of the passenger and/or frisks him/her;
- a sixth security agent who checks the flow of the passengers after the security check point to intercept possible passengers attempting to escape inside the restricted access area (18).
In the security check point of the present invention, instead, the following security agents can be sufficient:
- the second security agent who controls the baggage at the inspection station (12) by means of the inspection apparatus (9) and who controls the check result of the passenger documents;
- the third security agent to visually inspect the baggage content following the recommendation of the second security agent in the case in which suspicious objects have been detected by means of the inspection apparatus (9);
- the fourth security agent who controls the passage of the passenger across the arch or security portal (10) and who possibly, in case of an alarm, asks the passenger to empty the pockets, step back through the arch or portal and pass through it again;
- the fifth security agent who uses a magnetometer wand to examine the body of the passenger and/or frisks him/her;
- the fifth security agent who uses a magnetometer wand to examine the body of the passenger and/or frisks him/her.
In practice the first security agent can be omitted because the checks he/she carries out are made by the system according to the present invention, possibly with the supervision of the second security agent. Moreover the performed checks are more efficient because they are not made by a person who could make errors due to inattention and/or tiredness, they are faster because they occur in an automatic way. The system also allows the immediate stop of a possibly flagged passenger to perform most careful controls on his/her baggage and/or on the passenger himself/herself. Moreover, in some particularly preferred embodiments, the stopped suspicious passenger is blocked within a closed area and the possibility to escape toward the free access areas and/or toward the restricted access areas is precluded to him/her, improving the effectiveness of the security check point as a whole. Indeed in the security check points of the prior art, a possible ill-intentioned passenger, following the stop could get nervous and try to escape toward the free access areas and/or toward the restricted access areas. By means of the system according to the present invention also the sixth security agent can be omitted or at least the number of security agents controlling the flow of the passengers after the security check point can be cut down, assigning them a greater number of security check points because the physical blocking of the passenger can occur by means of the previously illustrated means. Moreover, the security agents can be put on state of alert in advance in the case of possible anomalies highlighted by the system and get ready for possible unpredictable actions by the ill-intentioned passenger.

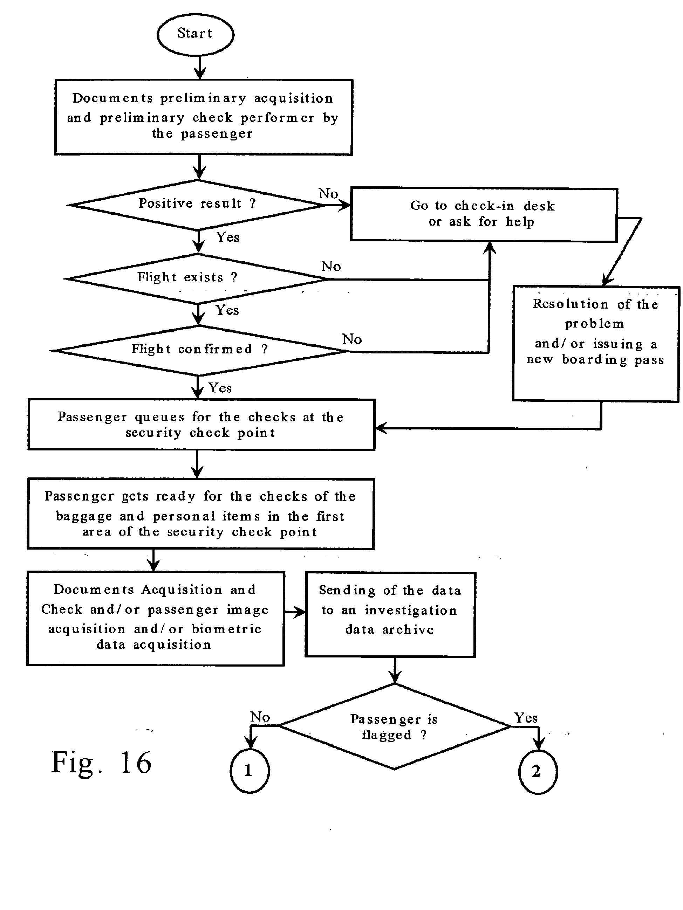

As a whole, the passenger check according to the method to manage the access to restricted-access areas according to the present invention occurs (Figs. 16-19) in the following way. It will be apparent that the following description refers to an embodiment including all the possible previously illustrated variations and alternatives and that, according to the actually present functionalities, some steps can be absent. In view of the previous description, it will be apparent to one skilled in the art how the represented block diagram must be modified depending on the actually present functionalities. At the beginning the passenger (Fig. 16) can perform a preliminary check of the documents, for example at a check station (2) located in the check-in area (14), said check providing the acquisition of the passenger documents and the relative check. In this way the passenger can perform a preliminary check even before queuing to have access to the security check point (1), preliminarily checking the validity of his/her own traveling documents. If the check has a negative result the passenger can go directly to a check-in desk (15) to solve the problem, for example by means of issuing a new boarding pass. In this way the passenger who has not the requirements to have access to the restricted access area is prevented to queue losing time and creating confusion during the security check procedures. In case of a positive result, instead, the system can also provide a check on the effective existence of the flight and on the fact that the flight has been confirmed, for example informing the passenger in the case in which certain particular conditions occur. For example if the flight has been cancelled the passenger can be requested to go to a check-in desk (15) to schedule again his/her travel, for example by means of issuing a new boarding pass. Or the passenger can be requested to immediately proceed to the security check point according to the waiting times provided by the system and that are known, as previously explained, by means of the system according to the present invention. If all the checks have a positive result the passenger can queue at a security check point being sure that he/she will pass the first check at the security check point itself. In this way also the queues before the security check points can therefore be speeded-up, preventing therein the presence of passengers who would be rejected. At this point the passenger can get ready for the check, for example (Fig. 15) depositing his/her hand baggage and his/her personal items on the first hand baggage track (6). Once he/she reaches the check station (2) located at the security check point (1), the documents of the passenger will be acquired and checked. Possibly also an image of the passenger will be acquired by means of the camera (11) and/or biometrical data by means of the biometric reader (49). All or part of data can be sent to an investigation data archive for further checks.

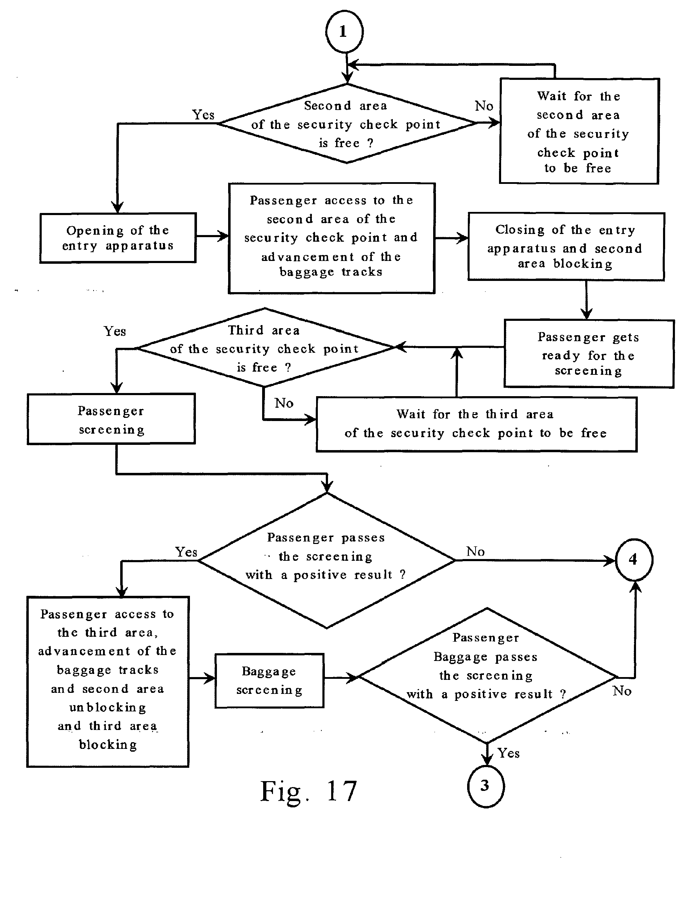

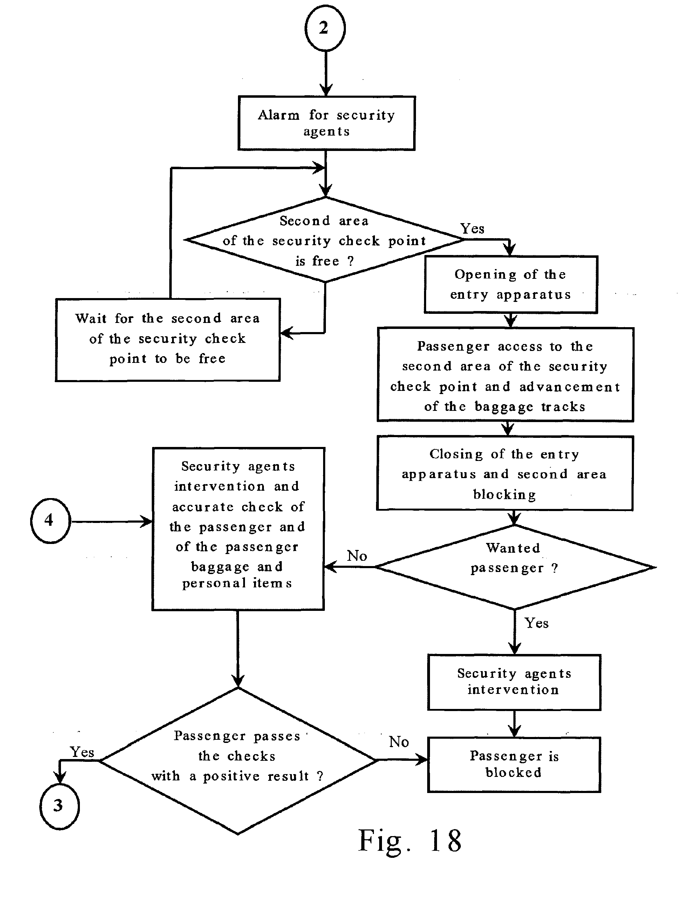

For example the result of these checks can give as a result the fact that the passenger is a flagged person, that is a person who in the past committed an offence or gave rise to problems or is suspected of illegal actions. In this case (Fig. 18), without the passenger realizing that an alarm occurred, the security agents of the check point will be put on state of alert and the second area (57) of the security check point is waited to be free, that is that no other passengers subject to the checks are present. In a different embodiment one can wait also for the third area (58) to be free. At this point the passenger entry apparatus (37) is unblocked, allowing the flagged passenger to have access to the second area (57) and the passenger entry apparatus (37) is blocked again. At the same time the control means of the first baggage tracks (6) are activated, if they are present, so that the baggage enter inside the second area (57) together with the passenger. Alternatively it will be the passenger himself/herself to drag his/her own baggage inside the area making them to slide on the first baggage track (6). In this way the flagged passenger is confined into a closed area and he/she cannot escape. In the case in which the passenger is a wanted person then the security agents will proceed to his/her stopping, preventing the passenger from accessing the restricted access area (18). In the case in which the passenger is a flagged person, because in the past he/she has tried to carry forbidden materials, then the security agents will proceed to an accurate control of the flagged passenger, of his/her baggage and his/her personal items. Only in the case in which the flagged passenger passes these accurate controls he/she will be allowed to proceed, while otherwise the passenger can be blocked without creating any confusion in the other security check points. If, instead, the result of the checks performed on the passenger documents and/or on his/her biometric data and/or on his/her image does not provide results such as to consider him/her as a suspected person, then (Fig. 17) the second area (57) of the security check point is waited to be free, that is that no other passengers subject to the checks are present. At this point the passenger entry apparatus (37) is unblocked, allowing the passenger to have access to the second area (57) and the passenger entry apparatus (37) is blocked again. At the same time the control means of the first baggage tracks (6) are activated, if they are present, so that the baggage enters inside the second area (57) together with the passenger. Alternatively it will be the passenger himself/herself to drag his/her own baggage inside the area making it to slide on - the first baggage track (6). Also in this way the passenger is confined, into a closed area and he/she cannot escape in case in which he/she is an ill-intentioned person, although he/she is not a flagged person. Although in the illustrated embodiment (Fig. 17), for ease of illustration, the scanning of the baggage has been indicated as occurring only after the passenger has passed the scanning by means of the portal (10), it will be apparent that preferably the baggage will be scanned in the inspection apparatus (9) simultaneously to the scanning of the passenger by means of the portal (10). If the scanning of the passenger and/or of his/her baggage is suspicious then the security agents can ask him/her to go to other passages through the portal (10) or they can arrange frisks and/or more accurate controls (Fig.18).

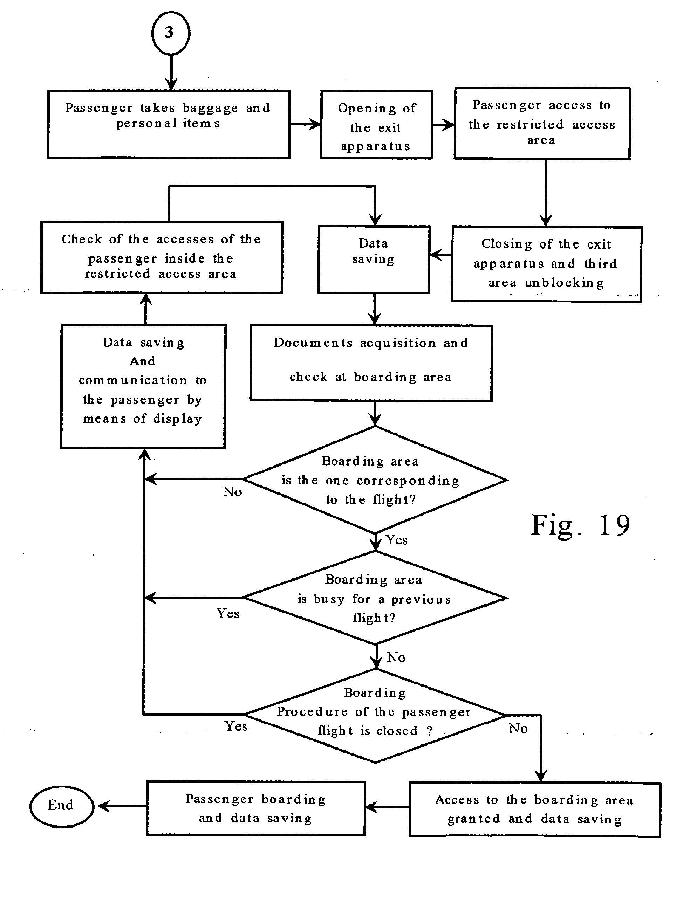

Preferably to perform the scanning of the passenger the third area (58) is waited to be free or the scanning of the passenger by means of the portal (10) can occur and, in the case in which said check is passed, the passenger can be required to wait in the second area (57) until the third area (58) has been freed. If the passenger passes all the checks occurring by means of the portal (10) and the inspection device (9), then (Fig. 19) the passenger can have access to the third area (58), unblocking the access to the second area (57) for the next passenger. The passenger who is in the third area (58) can take back the baggage and the personal items, the exit apparatus (54) will be unblocked, for example by means of the acquisition of the boarding pass of the passenger, and the passenger can have access to the restricted access area (18), unblocking the access to the third area (58) for the next passenger who is still in the second area (57).

At this point the saving can occur of the acquired data and of the performed checks results, with the possible input of additional notes (64) by the security agents.

At this point the passenger accesses inside the restricted access area can be controlled, for example by means of further check stations (2) provided with reading/scanning means (50), said further check stations (2) being located in correspondence of the trade companies (21, 39) of the airport, for example at the cash desk (22). This allows to follow the movements of the passenger inside the airport area and to generate appropriate statistics relative to the staying times in the various areas and to the access to the trade companies, to the waiting times and path covering times, allowing an improvement of the procedures and/or of the visibility of the trade companies and/or allowing to speed up the procedures depending on the generated statistics. It will be apparent that the data relative to the movements of the passenger can be in their turn saved joining them to the previously saved data in order to be able to successively reconstruct the movements of the passenger, if needed.

Furthermore the passenger access to the boarding areas (19) can be controlled, checking that the passenger has access to the proper boarding area for his/her flight and preventing him/her from having access to boarding areas relative to other flights or to boarding areas in which the boarding operations of other flights are in progress. An additional saving phase can be provided after the passenger has presented his/her boarding pass at the boarding desk (20), from which moment onward the passenger can be considered as boarded.

The system can further provide a check to be performed relative to the fact that, with the boarding procedures closed, all the passengers expected on that flight have been actually boarded and, in the negative case, the blocking of the passengers who lost the flight at the moment in which they try to have unauthorized accesses to other areas or the call of the non boarded passengers asking them to present themselves at a special control desk.

The description of this invention has been made with reference to the enclosed figures showing a preferred embodiment of the invention itself, but it is evident that many alterations, modifications and variations will be apparent to those skilled in the art in the light of the foregoing description. Thus, it should be understood that the invention is not limited by the foregoing description, but it embraces all such alterations, modifications and variations in accordance with the spirit and scope of the appended claims.

### USED NOMENCLATURE

With reference to the identification numbers reported in the enclosed figures, the following nomenclature has been used:
1. Security check-point
2. Check station
3. Turnstile
4. Gate
5. Handicap access door
6. First hand-baggage track
7. Conveyor belt
8. Second hand-baggage track
9. Inspection apparatus
10. Security portal
11. Camera
12. Inspection station
13. Check station
14. Check-in area
15. Check-in desk
16. Baggage conveyor
17. Security check area
18. Restricted-access area
19. Boarding area
20. Boarding desk
21. Shop
22. Cash desk
23. First screen of the check station
24. Passenger data section
25. Flight data section
26. Check section
27. Check result
28. Check result details
29. Second screen of the check station
30. Passenger image
31. Third screen of the check station
32. Baggage image
33. Selection means
34. Fast check-in station
35. Courtesy lane
36. Staff entry
37. Passenger entry apparatus
38. Control desk
39. Restaurant
40. Green light
41. Yellow light
42. Red light
43. Traffic lights
44. Display
45. Monitor
46. Boarding pass
47. Bar code
48. Encrypted bar code
49. Biometric reader
50. Optical reader or reading/scanning means
51. Consecutive baggage tracks
52. Keyboard
53. Electronic ticket
54. Passenger exit apparatus
55. Separator
56. First area of the security check-point
57. Second area of the security check-point
58. Third area of the security check-point
59. Free access area
60. Passengers queuing up area
61. Loudspeaker
62. Microphone
63. Pushbutton
64. Notes section

## Claims

1. Airport security check method to provide heightened security in the security check-points and in the other restricted access areas of the type including a check of the passenger by means of a screening of the passenger itself and a scanning of baggage and/or personal belongings of the passenger **characterized in that** said method provides that the security check point (1) be divided into at least three areas:
- a first area (56) of the security check point (1), said first area being located, with respect to the position of said security check point (1) in the airport, before said security check point (1) in the direction of a free access area (59) of the airport;
- a second area (57) of the security check point (1), said second area being located between a passenger entry apparatus (37) and a security portal (10);
- a third area (58) of the security check point (1), said third area being located, with respect to the position of said portal (10), after said portal (10) in the direction of the restricted access area (18) of the airport;
the access from said second area (57) to said third area (58) only occurring through the portal (10), the access from said first area (56) to said second area (57) only occurring through said passenger entry apparatus (37), said method comprising at least the following phases:
- acquiring at least the data which are present on a boarding pass (46) and/or ticket (53) by means of a reading/scanning occurring by means of a check station (2) provided with reading/scanning means (50);
- first check consisting in the comparison between said data acquired by means of said reading/scanning means (50) with the respective data of the flight on which the passenger must board and/or with other data made available to the system;
- second check of the passenger by means of a screening of the passenger by means of said portal (10);
- scanning of baggage and/or personal belongings of the passenger by means of said inspection apparatus (9);
- possible insertion of data and/or notes relative to the result of the performed controls;
said phase relative to said second check of the passenger occurring only following a positive result of the phase relative to said first check of the data of the passenger's documents, said comparison having a positive result only in the case in which said data are coincident with the respective data of the flight on which the passenger must board and/or with other data made available to the system.

2. Airport security check method according to the previous claim **characterized in that** said comparison has a positive result only in the case in which the flight on which the passenger must board exists and it is confirmed and/or the boarding procedures of the flight have not being closed.

3. Airport security check method according to any of the previous claims 1 to 2 **characterized in that** said phase relative to the data acquisition also includes the acquisition of the data of an identity card or passport of the passenger, the phase relative to the first check also providing the comparison between the identity of the passenger acquired from said identity card or passport and the identity of the passenger acquired from said passenger boarding pass (46) and/or ticket (53), said comparison having a positive result only in the case in which said data are coincident.

4. Airport security check method according to any of the previous claims 1 to 3 **characterized in that** said phase relative to said first check of the data of the passenger's documents includes the checking of one or more of the following data:
- Identity of the passenger
- Boarding pass code
- Flight code
- Date of the flight
- Scheduled departure time of the flight
- Acceptance sequence
- Departure airport
- Transit airport or airports
- Destination airport
- Scheduled boarding gate
- Travel class
- Reserved seat
- Flight reservation number

5. Airport security check method according to any of the previous claims 1 to 4 **characterized in that** said comparison between said data acquired by means of said reading/scanning means (50) and said data relative to the flight on which the passenger must board occurs by means of said boarding pass code, said boarding pass code being a unique code assigned to said boarding pass (46) and/or ticket (53) intended to be acquired by means of said reading/scanning means (50) and intended for the comparison with the data of the flight on which the passenger must board, said comparison having a positive result only in the case in which said boarding pass code corresponds to one of the boarding pass codes which are authorized for the access to the corresponding flight.

6. Airport security check method according to any of the previous claims 1 to 5 **characterized in that** said phase relative to the acquisition of at least the data which are present on a boarding pass (46) and/or ticket (53) occurs by means of reading/scanning an encrypted bar code (48) printed on said boarding pass (46) and/or ticket (53).

7. Airport security check method according to any of the previous claims 1 to 6 **characterized in that** the access the security check area (17) by the passenger is prevented in the case in which he/she does not pass with a positive result the phase relative to said first check of the data of the passenger's documents.

8. Airport security check method according to any of the previous claims 1 to 6 **characterized in that** the access the security check area (17) by the passenger is prevented in the case in which:
- he/she does not pass with a positive result the phase relative to said first check of the data of the passenger's documents and
- the passenger who previously passed through said entry apparatus (37) has gone past said portal (10), freeing said second area (57) and accessing to said third area (58), said portal (10) being provided with means intended to detect the passage of the passenger through said portal with a positive result of the check made by said portal (10).

9. Airport security check method according to any of the previous claims 1 to 8 **characterized in that** the passengers are physically prevented from exiting from the security check area (17), until they have passed with a positive result all the previous checking phases.

10. Airport security check method according to any of the previous claims 1 to 9 **characterized in that** it includes a phase relative to the acquisition of an image (30) of the face of the passenger who is subject to the checks in said security check area (17).

11. Airport security check method according to any of the previous claims 1 to 10 **characterized in that** it includes a phase relative to the acquisition of biometric data of the passenger who is subject to the checks in said security check area (17).

12. Airport security check method according to any of the previous claims 1 to 11 **characterized in that** said method further comprises a phase relative to the saving of all or part of the acquired data and/or of the result of the performed checks and/or of the result of the performed controls and/or a phase relative to the sending of the data to a data archive intended to perform further checks on the passenger and/or on his/her identity or authorization to board.

13. Airport security check method according to any of the previous claims 1 to 12 **characterized in that** said method further comprises a phase relative to the identification of the status of the passenger by means of the verification of the passage of said corresponding boarding pass (46) and/or ticket (53) at check points/stations (15, 1, 21, 39, 19, 20) of said boarding pass (46) and/or ticket (53), said status of the passenger being able to assume the statuses selected from the group consisting of:
- Check-in performed: the passenger has performed the check-in but he has not gone to the security check area (17) yet, the passenger being in the free-access area (59);
- Security check taking place: the passenger is in the security check area (17);
- Boarding waiting: the passenger has passed the security check area (17) but he has not boarded yet, the passenger being in the restricted-access area (18);
- Trade area access: the passenger is in the trade areas (21, 39) of the restricted-access area (18);
- Boarding performed: the passenger has gone out from the restricted-access area (18) and has boarded.

14. System to provide heightened security in the security check-points and in the other restricted access areas of an airport operating according to the method according to any of the claims 1 to 13, said system being of the type including:
- at least one security check-point (1) comprising at least one security portal (10) through which the passengers entering a restricted access area (18) must pass undergoing a screening relative to the presence of forbidden objects, an inspection apparatus (9) provided with at least one first hand-baggage track (6) and at least one second hand-baggage track (8) and a conveyor belt (7) to convey the baggage and/or the personal belongings through said inspection apparatus (9), an inspection station (12) being associated to said inspection apparatus (9) allowing a security agent to check the result of the scanning performed by means of said inspection apparatus (9) on said baggage and/or personal belongings identifying the forbidden articles;
- separators (55) provided between adjacent security check-points (1) preventing passengers to move from one security check-point (1) to another one after they entered one of the security check-points (1);
**characterized in that** it comprises at least one passenger entry apparatus (37) and one check station (2), said check station (2) being provided with reading/scanning means (50) intended to read/scan at least one passenger boarding pass (46) and/or ticket (53) to acquire data on the passenger and/or on the flight, said passenger entry apparatus (37) and said portal (10) defining:
- a first area (56) of the security check point (1), said first area being located, with respect to the position of said passenger entry apparatus (37), before said passenger entry apparatus (37) in the direction of a free access area (59) of the airport, at least one of said check station (2) being located at said first area (56) of the security check point (1);
- a second area (57) of the security check point (1), said second area being located between said passenger entry apparatus (37) and said portal (10), said conveyor belt (7) conveying baggage and/or personal items through said inspection apparatus (9) being located in said second area (57);
- a third area (58) of the security check point (1), said third area being located, with respect to the position of said portal (10), after said portal (10) in the direction of the restricted access area (18) of the airport, said inspection station (12) being located in said third area (58);
the access from said second area (57) to said third area (58) only occurring through the portal (10), the access from said first area (56) to said second area (57) only occurring through said passenger entry apparatus (37), the system to provide heightened security in the security check-points and in the other restricted access areas of an airport providing at least two checks of the passenger, a first check of which occurring by means of said data acquired during said acquisition phase by means of said reading/scanning means (50), said first check occurring by means of a comparison between said data with the respective data of the flight on which the passenger must board and/or with other data made available to the system, said comparison having a positive result only in the case in which said data are coincident and/or if the flight
exists and is confirmed and/or the boarding procedures of the flight have not being closed, and a second check of the passenger occurring by means of said portal (10).

15. System to provide heightened security in the security check-points and in the other restricted access areas according to the previous claim and operating according to the method according to claim 7 **characterized in that** said passenger entry apparatus (37) is provided with openable/closable means blocking the access from said first area (56) to said second area (57), the opening of said openable/closable access blocking means occurring at least on the basis of a positive result of said first check by means of a comparison between said data, said passenger entry apparatus (37) being connected to said separators (55) forming a barrier together with them when said passenger entry apparatus (37) is in a closed condition, said barrier formed by said passenger entry apparatus (37) connected to said separators (55) preventing the passenger from entering into said first area (56) if the passenger is in said free access area (59) and he/she does not pass with a positive result said first check, said barrier preventing the passenger to escape from said first area (56) back to said free access area (59) if the passenger is inside said first area (56).

16. System to provide heightened security in the security check-points and in the other restricted access areas according to claim 14 and operating according to the method according to claim 8 **characterized in that** said passenger entry apparatus (37) is provided with openable/closable means blocking the access from said first area (56) to said second area (57), said passenger entry apparatus (37) being connected to said separators (55) forming a barrier together with them when said passenger entry apparatus (37) is in a closed condition, said barrier formed by said passenger entry apparatus (37) connected to said separators (55) preventing the passenger from entering into said first area (56) if the passenger is in said free access area (59) and he/she does not pass with a positive result said first check, said barrier preventing the passenger from escaping from said first area (56) back to said free access area (59) if the passenger is inside said first area (56), the opening of said openable/closable access blocking means occurring if at least the following conditions occur:
- the result of said first check by means of a comparison between said data is a positive result
- the passenger who previously passed through said entry apparatus (37) has gone past said portal (10), freeing said second area (57) and accessing to said third area (58), said portal (10) being provided with means intended to detect the passage of the passenger through said portal with a positive result of the check made by said portal (10).

17. System to provide heightened security in the security check-points and in the other restricted access areas according to any of the previous claims 14 to 16 **characterized in that** said check station (2) provided with reading/scanning means (50) intended to read/scan at least one passenger boarding pass (46) and/or ticket (53) and/or identity documents is a column shaped check station.

18. System to provide heightened security in the security check-points and in the other restricted access areas according to any of the previous claims 14 to 17 **characterized in that** said passenger entry apparatus (37) provided with openable/closable means is a turnstile (3), said turnstile (3) comprising said check station (2) provided with reading/scanning means (50), or said passenger entry apparatus (37) provided with openable/closable means is a gate (4), said gate (4) comprising said check station (2) provided with reading/scanning means (50), or said passenger entry apparatus (37) provided with openable/closable means is a handicap access door (5), said handicap access door (5) comprising said check station (2) provided with reading/scanning means (50).

19. System to provide heightened security in the security check-points and in the other restricted access areas according to any of the previous claims 14 to 18 **characterized in that** it comprises a check station (13) at least including a monitor (45) displaying said data acquired by means of said reading/scanning means (50) and the result of the check, on the screen of said monitor (45) one or more of the following sections been displayed:
- passenger data section (24) showing one or more among the following data: passenger name, departure airport, transit airport or airports, destination airport, acceptance sequence;
- flight data section (25) showing one or more among the following data: the flight number, the flight date, the scheduled departure time, the expected departure time, the boarding gate, the status of the flight, the travelling class and the seat;
- check section (26) showing the check result (27) and the check result details (28) and/or the reason of an alarm and/or the request for more extensive checks to be performed on the passenger and/or on his/her baggage;
- baggage image (30) acquired by means of said inspection apparatus (9), more than one image been able to be consecutively displayed by means of selection means (33) of the acquired images.
- notes section (64) to input, by means of said keyboard (52) of the check station (13), notes relative to the performed checks and/or recommendations to be taken into account during possible future controls to be performed on the same passenger.

20. System to provide heightened security in the security check-points and in the other restricted access areas according to any of the previous claims 14 to 19 **characterized in that** it comprises further check stations (2) provided with reading/scanning means (50), said further check stations (2) being located at the accesses to the boarding areas (19) and or at boarding desks (20) and/or at the trade companies (21, 39) of the airport.

21. System to provide heightened security in the security check-points and in the other restricted access areas according to any of the previous claims 14 to 20 **characterized in that** said first hand-baggage track (6) comprises a plurality of consecutive baggage tracks (51), at least one of said consecutive baggage tracks (51) being located in said first area (56), at least one of said consecutive baggage tracks (51) being provided with motor movement means, the activation of said motor movement means occurring following a positive result of said comparison between said data.

22. System to provide heightened security in the security check-points and in the other restricted access areas according to the previous claim **characterized in that** it comprises an additional check station (2) which is located before said plurality of consecutive baggage tracks (51).

23. System to provide heightened security in the security check-points and in the other restricted access areas according to any of the previous claims 14 to 22 and operating according to the method according to claim 9 **characterized in that** it comprises a passenger exit apparatus (54) provided with openable/closable means blocking the access from said third area (58) to said restricted access area (18), said passenger exit apparatus (54) being connected to said separators (55) forming a barrier together with them when said passenger exit apparatus (54) is in the closed condition, said barrier formed by said passenger exit apparatus (54) connected to said separators (55) preventing the passenger from exiting from said third area (58), said passenger exit apparatus (54) being provided with a check station (2) provided with reading/scanning means (50), the opening of said openable/closable access blocking means occurring only if the passenger has passed all the provided checks with a positive result.
